# EUROPEAN PATENT SPECIFICATION

(11) **EP 1 972 128 B1**
(45) Date of publication and mention of the grant of the patent: **30.01.2019**
(21) Application number: 06820126.8
(22) Date of filing: 11.12.2006
(51) Int. Cl.: H04L 29/06, H04W 92/02, H04W 92/24, H04L 29/12

(54) **A COMMUNICATION METHOD, A SYSTEM AND A NAME RESOLVING SYSTEM**
KOMMUNIKATIONSVERFAHREN, SYSTEM UND NAMENAUFLÖSUNGSSYSTEM
PROCÉDÉ DE COMMUNICATION, SYSTÈME ET SYSTÈME DE RÉSOLUTION DE NOM

(30) Priority: 11.01.2006 FI 20065018
(43) Date of publication of application: 24.09.2008
(73) Proprietor: Telia Company AB, 169 94 Solna (SE)
(72) Inventor: KORHONEN, Jouni, 11100 Riihimäki (FI); JALKANEN, Tero, 04340 Tuusula (FI)
(74) Representative: Berggren Oy, Tampere
(86) International application number: PCT/FI2006/050547
(87) International publication number: WO 2007/080213

(56) References cited:
- EP-A1- 1 139 631
- WO-A1-03/045074
- Anonymous: "Inter-PLMN Backbone Guidelines", , 1 October 2003 (2003-10-01), pages 1-41, XP055290392, Retrieved from the Internet: URL:https://web.archive.org/web/2004073118 4258/http://www.gsmworld.com/documents/ire g/ir34.pdf [retrieved on 2016-07-21]
- Anonymous: "GeoDNS: BIND patch to add geographical filters to views", , 12 December 2005 (2005-12-12), pages 1-1, XP055290360, Retrieved from the Internet: URL:https://web.archive.org/web/2005121213 0955/http://www.caraytech.com/geodns/ [retrieved on 2016-07-21]
- SCHULZRINNE ET AL.: 'Signaling for Internet Telephony' CONFERENCE PROCEEDINGS ARTICLE, INSTITUTE OF ELECTRICAL AND ELECTRONICS ENGINEERS 13 October 1998, pages 298 - 307, XP002139514

## Description

This invention relates generally to communication between operators. In particular, this invention relates to a method, to a system and to a name resolving system for an inter-service-provider-I P-backbone.

### Background of the invention

An inter-service-provider-IP-backbone corresponds to a network that enables interworking between 2G and 3G networks such as the GPRS (General Packet Radio Service) and UMTS (Universal Mobile Telecommunications System) networks. An example of the inter-service-provider-IP-backbone is GRX (GPRS Roaming eXchange) network, which is provided for GPRS roaming. The GRX is a private IP backbone, and it is arranged to transport GPRS roaming traffic between a visited and a home PMN (Public Mobile Network). At a minimum, a GRX Service Provider consists of a set of routers that are made up of the links connecting to the GPRS networks and the links connecting to other GRX nodes. In addition to the GPRS roaming, the GRX can also be used for e.g. 3G roaming, WLAN roaming and MMS interworking.

The purpose of the GRX is to provide a more practical solution for implementing a secure connection between operators. Practicality means that thanks to the GRX there is no need to build up separate tunnels or other systems between all operators but to implement a secure network, which is differentiated from the Internet or other irrelevant network parties. The secure network has to be a closed network and to remain closed in order to be also reliable and in order not to require additional security features within the network. The closed network has other advantages as well. For example, it is possible to secure the quality of the service as well as both the availability and the scalability of the network. Operators providing the GRX network are called GRX operators, and they do not need to be but may be mobile operators as well.

The GRX uses addressing that is similar to that used in the Internet. However, the addressing is completely differentiated from the Internet. The GRX operators are in charge of controlling and monitoring that addresses allocated for the GRX are not routed in the Internet, and vice versa. If this still happens, it can be assumed that a leak or a configuration error has occurred. The GRX also has a DNS (Domain Name System) hierarchy that is also completely differentiated from the Internet, and that is aimed only for a use of nodes and roaming connections between operators. In other words, it is required that nothing should be resolved from the Internet within the GRX, and nothing should be resolved from the GRX within the Internet. Therefore in the sense of DNS and routing, the GRX and the Internet are diverse and apart from each other.

It is advantageous to have the GRX separated from the Internet, but there are also some disadvantages. For example the use of similar domains used in the Internet is restricted. For instance, addresses that are understandable to the end users do not work in the GRX. This is because the GRX has been designed purely between operators, and because the type of cryptic forms used has been less important, because the users have been the operators. However, it will be appreciated that requesting the end users to utilize these forms is not desirable.

IP Multimedia Subsystem (IMS) is an open multi-media architecture for mobile and fixed IP services. The aim of the IMS is to provide services which can be executed by the users when they are roaming as well as in their home networks. An IMS network comprises elements, such as I-CSCF and S-CSCF for implementing at least call/session and control functions. The I-CSCF (Interrogating-CSCF) element operates as a contact point and forms an access to the operator network in question. All the sessions addressed to a subscriber of a certain network are first received in the I-CSCF element. The serving control function S-CSCF element implements call session control services to a terminal. The registering of users and the identification of the registered users are implemented in S-CSCF. The IMS will further comprise means for directing traffic between operators, e.g. a proxy. This kind of a proxy is located in the network in order to ease routing, testing and commercial contracting. The proxy is thus arranged to operate as a transmitter for e.g. SIP/IMS (Session Initiation Protocol/IP Multimedia Subsystem) based services (later referred as SIP services). Examples of other services are MMS (Multimedia Messaging Service) and other IP communication methods.

When services are used between different operators cooperatively, each operator may utilize a different kind of a connection. For example, MMS communication may be passed from Operator A to Operator B along a separate fixed connection, but from Operator A to Operator C directly by utilizing e.g. the GRX network, and further from Operator A to Operator D along the GRX network, but using a gateway or the proxy therein. It can be seen that a problem relating to these different connections exists in the interworking between the different operators, because the operator A in the previous example has to be capable of offering these (three) different connections invisible to other operators. For example, when Operator C makes a DNS query for forming a connection to Operator A, the response to be sent to Operator C has to be different from the one sent to Operator D, because the methods for forming the connection are different.

In a network environment, where an Internet connection can be acquired for a device via several different service providers, the transmitting operator needs to know, to which recipient's network element the transmission should be targeted. Therefore the transmitting operator has to know all the receiving network elements of the recipient in order to have a successful transmission. Conventionally, the operators have maintained static lists or databases on network elements of the receiving operators. In other words, each operator stores information of all the network elements used by each receiving operator.

Publication "Inter-PLMN Backbone Guidelines" (October 2003) discloses guidelines for inter-PLMN networks and inter-PLMN connectison between IP based PLMN backbone network. The publication gives guidance to PLMN operators for connecting their IP based backbone networks and service together related to the roaming and inter-working scenarios between them by using inter-PLMN networks.

The static lists that are used in the art for routing require maintenance and updating operations, because servers may be added or deleted by the operator, and the servers' addresses may change. Because the number of all operators may amount to hundreds, the workload will be enormous. Therefore what is needed is an improved system for the cooperation of services between operators. This invention addresses to such a need.

### Summary of the invention

The current invention relates to improved DNS queries, whereby static lists may be removed from the operators. The current invention works in the inter-service-IP-backbone, and utilizes the proxy therein. The current invention relates to a method, a system and a name resolving system for the inter-service-IP-backbone.

The method is mainly characterized in that in the method a source for the query is determined, whereby depending on the source, a response is returned with an address either to the proxy or to the receiving operator.

The system is mainly characterized in that the system is capable of determining a source for the query, whereby depending on the source, the name resolving system is capable of returning a response with an address either to the proxy or to the receiving operator.

The name resolving system is mainly characterized in that the name resolving system is capable of determining a source for the query, whereby depending on the source, the name resolving system is capable of forming a response including an address either to the proxy or to the receiving operator, and returning said address to the source.

Other embodiments for the current invention are described in the dependent claims.

Thanks to the invention, depending on the party making the query, the operator may give to a DNS query a different response. For example, national partners for connecting network can be given an answer for a direct connection, but other partners are directed to a separate proxy or a gateway.

In addition, instead of static lists used in the related art, a traditional DNS system can be used. For example, if an IP-address of an I-CSCF-element of Operator A changes, the information is transmitted to the interworking partners via DNS queries.

The invention can be utilized in any IP-based service, not only with MMS or IMS. In addition, the method is not specific for GRX.

The current invention makes it possible to use alternative ways for connecting traffic efficiently and smoothly.

### Brief description of drawings

The accompanying drawing, which is incorporated in and constitutes a part of this specification, illustrates an example relating to this invention and, together with the description, explains the objects, advantages and principles of the invention.

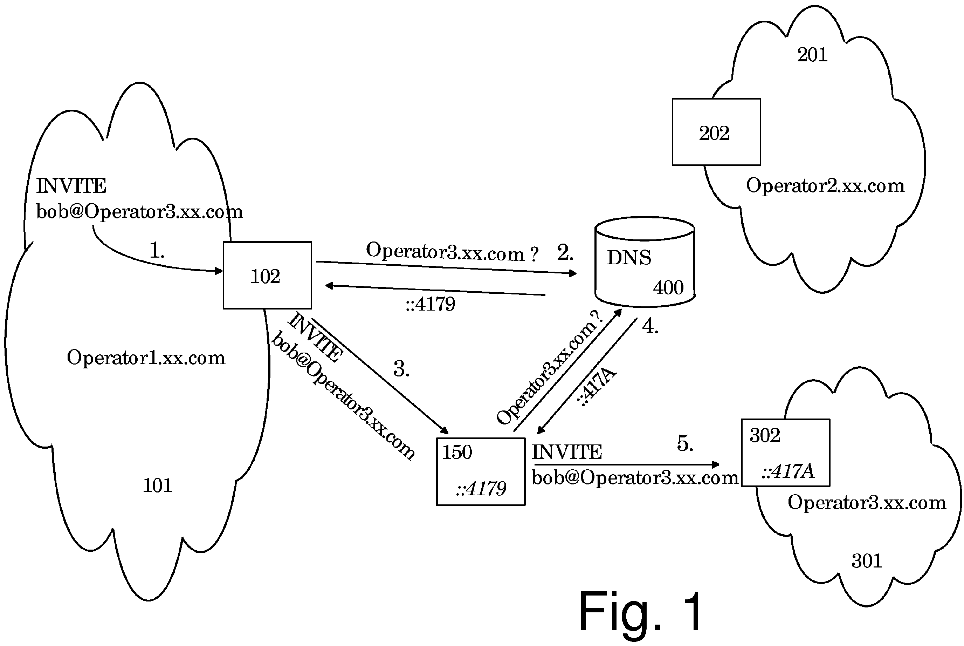

Figure 1 illustrates an example of a system according to the invention.

### Detailed description of the invention

The current invention relates to an inter-service-provider-I P-backbone, e.g. GRX network that is common to existing operators. Another example of the inter-service-provider-IP-backbone is the CRX network (CDMA Roaming eXchange). The purpose of the GRX network is to connect GPRS networks, and thus to provide the GPRS subscribers with an access to Internet services. The traffic between the operators can be delivered via a proxy, e.g. an IPX proxy, which is an extended version of a SIP proxy.

Let us assume that an operator A has an agreement for connecting traffic with operators Z, X and W. h this example the operators are located in the same country, and the connection between them is direct. However, it will be obvious that direct connections can also exist between operators in different countries.

Similarly, in the current example, operators in different countries will have a connection via the IPX proxy, i.e. indirect connection. A person skilled in the art will appreciate that the connections used do not need to depend on the locations of the operators, but the connection type is based on the agreement between operators. However, in this example the operator A resides in the same country as the operator Z and therefore they have a direct connection for the communication between them. The operators X and W are foreign operators, whereby the traffic from the operator A to them is passed via the proxy. In order to route the traffic between operators, a name resolving system or a similar system carrying out operations for address resolving, e.g. a DNS system, of the inter-service-provider-IP-backbone is, according to the current invention, arranged to response to a similar query with different answers depending on who is making the query. In other words when a query from a transmitting party is received in the DNS system, the DNS system determines where the query originates from. According to the transmitting party, the DNS system resolves the recipient's address included in the query, and configures a response including either an address to the IPX proxy or a direct address to the receiving operators.

In the previous example, a client of the operator Z forms e.g. a SIP-based game session by utilizing IMS with a client of the operator A and uses an address: Client@OperatorA.com. The operator Z makes a DNS query to the name resolving system which responses with a direct address to an I-CSCF-element locating in the IMS-system of the operator A. A SIP message is transmitted to the address, and connection will then be set up.

The case of the operator W is similar to the previous example. The operator W makes a DNS query to the name resolving system for which query the name resolving system sends a response including, however, an address of a gateway/proxy in the GRX network instead of address of its I-CSCF-element. Therefore a SIP message from the operator W will be transmitted to the proxy, which directs the message to the operator A. As a result of this, the connection will be formed. For the transmission the operator W uses rules that are stored in the operator W.

It can be realized from the previous examples that according to the invention, two similar queries are given to two similar queries, depending on the party making the query. The name resolving system determines the source for the query, i.e. who is the transmitting party or the transmitting operator. The operators Z and A reside in the same country, or they have otherwise a direct connection, and therefore addresses to the I-CSCF element are given as responses to the queries to the name resolving system. However, the operators W and A reside in different countries, or they have otherwise an agreement for connections via proxy, and therefore addresses of the proxy are given as responses to the queries to the name resolving system made by either of the operators W and A and addressed to the other one of the operators W and A. Thanks to this arrangement, single parties do not need to be defined separately. When the configuration for the invention is implemented, it does not necessarily need to be changed again as long as the agreements between the operators are valid and the connection types (direct connection/connection via the proxy) are not interchanged.

Figure 1 illustrates a possible configuration of a system of the current invention, wherein a connection is made by using the IPX Proxy. In figure 1, a client of an operator 1 (101) is sending an SIP INVITE message (1) to a client of an operator 3 (301). A border gateway (102) of the operator 1 (101) queries (2) information on the operator 3 from a domain name server (400) in the network, e.g. GRX network. In the DNS query the border gateway (102) of the operator 1 (101) transmits the humanreadable address of the operator 3 (301) to the domain name server (400), which domain name server (400) responds to the query by returning the corresponding IP address to the border gateway (102). In this example the border gateway (102) receives an address (::4179), which is the address to the IPX Proxy (150). As a result of this, the border gateway (102) is capable of sending (3) the SIP INVITE message to the IPX Proxy (150). After receiving the SIP INVITE message, the IPX Proxy (150) in turn asks (4) for information on the operator 3 from the domain name server (400) in the GRX/IPX network. The operation is similar to the operation where the operator 1 queried address for the operator 3. The domain name server (400) returns an address (::417A), which is the address to a border gateway (302) of the operator 3 (301). Knowing the address to the operator 3's border gateway (302), the IPX Proxy transmits the SIP INVITE message to the border gateway (302) in question.

In the previous example, the operator 1 and the operator 3 use the IPX Proxy between them. If a direct connection was used as between the operator 1 and the operator 2, then the border gateway (102) of the operator 1 (101) would get directly an address to the border gateway (202) of the operator 2 (201), whereby the SIP INVITE message would be sent directly to the operator 2 without the IPX Proxy 150. This means that when the operator 1 (101) makes a DNS query to the domain name server (400) in order to get the address for the operator 2 (201), the domain name server (400) returns directly the address of the border gateway (202) of the operator 2 (201)

It is possible to utilize e.g. the feature of the name resolving system to return different responses to the same query depending on where the query originated from. This can be implemented e.g. by a DNS BIND view feature or similar methods. There is also a possibility to utilize so called wild card method, which means that all the parties making queries and having e.g. a country code in common are given certain information that is different from the information for parties not having the common code. For example, the DNS system may know that all queries concerning "sonera.fi" and coming from operators having a server identification with ".fi" are responded to by giving the actual addresses, and queries from operators having some other server identification are responded to by giving the address of the proxy.

In the system configuration according to the current invention, the proxies can be chained, whereby the traffic does not need to be passed via only one proxy. Thanks to the invention, the number of commercial agreements between different operators can be reduced, because advantageously only one agreement is needed with a proxy provider. The proxy operates as a commercial broker to the other operators. Even though many operators use direct connections, for which the proxy is not necessarily needed, the invention still provides a possibility to handle the rest of the operators in a sophisticated way.

In the invention the proxy functions as specified, e.g. it makes the DNS queries. It is advantageous to have a proxy that is invisible and that does not require any configurations. The GRX operators having DNS systems need to cache their own DNSs to the system of the current invention. For those having their own DNS systems, it can be easily agreed, how the system according to the invention works. It is for example possible to have e.g. a countrywide proxy, whereby operators of that country do not need to pay attention to the proxy's address configuration for traffic coming into that country. What should be noticed, is that - thanks to the current invention - the proxy or the party making the query does not need to know the address of the receiving party, whether the receiving party uses a proxy, whether it has one border gateway or some other elements, whether it has changed its address yesterday, etc. This responsibility has been outsourced to the GRX, the proxy provider.

The functionality for the invention can be implemented by existing network elements, by organizing them in order to have the desired functions. Additionally, the aforementioned systems and databases are preferred embodiments; however one skilled in the art will appreciate that numerous other databases and systems may suitably communicate with the present system in order to provide enhanced functionality. The characteristics of the inter-service-provider-I P-backbone are such that the current invention takes into account. The important feature of the inter-service-provider-IP-backbone is its own DNS-system that is distinct from the public Internet. In the inter-service-provider-IP-backbone, there are separate top-level-domains that are not found in public. The functionality is built in the inter-service-provider-I P-backbone. It will be clear that variations and modifications of the examples of embodiment described are possible without departing from the scope of protection of the invention as set forth in the claims.

## Claims

1. A method for an inter-service-provider-IP-backbone comprising a name resolving system (400) and a proxy (150), the proxy connecting multiple operator networks, wherein a query for a receiving operator (201, 301) is sent by a transmitting party in a source operator network to the name resolving system (400) in order to send data relating to an SIP service from the source operator network to a subscriber of the receiving operator (201, 301), **characterized in that** in the method, the source (101) for the query is determined by the name resolving system, whereby depending on the source, a response is returned with an address either of the proxy (150) or of a border gateway of the receiving operator network (201).

2. The method according to claim 1, wherein if the response includes the address of the proxy (150), the data is sent to the proxy (150), whereby another query for the receiving operator (301) is made to the name resolving system (400), or if the response includes the address of the border gateway of the receiving operator (201), the data is sent to the receiving operator (201).

3. The method according to claim 1 or 2, wherein the response is configured by determining the source (101) and the type of connection from the source to the receiving operator (201, 301).

4. The method according to claim 3, wherein the response with the address of the border gateway of the receiving operator (201) is configured when the source (101) has a direct connection to the receiving operator (201).

5. The method according to claim 3, wherein the response with the address of the proxy is configured when the source (101) has an indirect connection to the receiving operator (301).

6. A system for an inter-service-provider-IP-backbone comprising a name resolving system (400) and a proxy (150), the proxy connecting multiple operator networks, wherein the system is capable of transmitting a query for a receiving operator (201, 301) by a transmitting party in a source operator network to the name resolving system (400) in order to send data relating to an SIP service from the source operator network to a subscriber of the receiving operator (201, 301), **characterized in that** the name resolving system is capable of determining the source (101) for the query, whereby depending on the source, the name resolving system (400) is capable of returning a response with an address either of the proxy (150) or of a border gateway of the receiving operator network (201).

7. The system according to claim 6, wherein if the response includes the address of the proxy (150), the system is capable of sending the data to the proxy (150), which (150) is further capable of making another query for the receiving operator (301) to the name resolving system (400), or if the response includes the address of the border gateway of the receiving operator (201), the system is capable of sending the data to the receiving operator (201).

8. The system according to claim 6 or 7, wherein the system is capable of configuring the response by determining the source (101) and the type of connection from the source to the receiving operator (201, 301).

9. The system according to claim 8, wherein the name resolving system (400) is capable of configuring the response with the address of the border gateway of the receiving operator (201) when the source (101) has a direct connection to the receiving operator (201).

10. The system according to claim 8, wherein the name resolving system (400) is capable of configuring the response with the address of the proxy, when the source (101) has an indirect connection to the receiving operator (301).

11. The system according to any of the claims 6 to 10, wherein the inter-service-provider-IP-backbone is a GRX network.

12. A name resolving system (400) for an inter-service-provider-IP-backbone, being arranged to accept a query for a receiving operator (201, 301), **characterized in that** the name resolving system (400) is capable of determining a source (101) for the query, whereby depending on the source, the name resolving system (400) is capable of configuring a response including an address either of a proxy (150) or of a border gateway of the receiving operator, and returning said address to the source, wherein said proxy is connecting multiple operator networks.

## Patentansprüche

1. Verfahren für einen Inter-Service-Provider-IP-Backbone, umfassend ein Namenauflösungssystem (400) und einen Proxy (150), wobei der Proxy mehrere Betreibernetzwerke verbindet, wobei von einer übertragenden Partei in einem Quellenbetreibernetzwerk eine Abfrage nach einem empfangenden Betreiber (201, 301) an das Namenauflösungssystem (400) gesendet wird, um Daten bezüglich eines SIP-Services von dem Quellenbetreibernetzwerk an einen Teilnehmer des empfangenden Betreibers (201, 301) zu senden, **dadurch gekennzeichnet, dass** bei dem Verfahren die Quelle (101) für die Abfrage durch das Namenauflösungssystem bestimmt wird, wobei abhängig von der Quelle eine Antwort mit einer Adresse entweder des Proxys (150) oder eines Grenz-Gateways des empfangenden Betreibernetzwerks (201) zurückgesendet wird.

2. Verfahren nach Anspruch 1, wobei, wenn die Antwort die Adresse des Proxys (150) enthält, die Daten an den Proxy gesendet (150) werden, wobei eine weitere Abfrage für den empfangenden Betreiber (301) an das Namensauflösungssystem (400) getätigt wird, oder, wenn die Antwort die Adresse des Grenz-Gateways des empfangenden Betreibers (201) enthält, die Daten an den empfangenden Betreiber (201) gesendet werden.

3. Verfahren nach Anspruch 1 oder 2, wobei die Antwort konfiguriert wird, indem die Quelle (101) und die Art der Verbindung zwischen der Quelle und dem empfangenden Betreiber (201, 301) bestimmt werden.

4. Verfahren nach Anspruch 3, wobei die Antwort mit der Adresse des Grenz-Gateways des empfangenden Betreibers (201) konfiguriert wird, wenn die Quelle (101) eine direkte Verbindung mit dem empfangenden Betreiber (201) aufweist.

5. Verfahren nach Anspruch 3, wobei die Antwort mit der Adresse des Proxys konfiguriert wird, wenn die Quelle (101) eine indirekte Verbindung mit dem empfangenden Betreiber (301) aufweist.

6. System für einen Inter-Service-Provider-IP-Backbone, umfassend ein Namenauflösungssystem (400) und einen Proxy (150), wobei der Proxy mehrere Betreibernetzwerke verbindet, wobei das System in der Lage ist, eine Abfrage nach einem empfangenden Betreiber (201, 301) durch eine übertragende Partei in einem Quellenbetreibernetzwerk an das Namenauflösungssystem (400) zu übertragen, um Daten bezüglich eines SIP-Services von dem Quellenbetreibernetzwerk an einen Teilnehmer des empfangenden Betreibers (201, 301) zu senden, **dadurch gekennzeichnet, dass** das Namenauflösungssystem in der Lage ist, die Quelle (101) für die Abfrage zu bestimmen, wobei abhängig von der Quelle das Namenauflösungssystem (400) in der Lage ist, eine Antwort mit einer Adresse entweder des Proxys (150) oder eines Grenz-Gateways des empfangenden Betreibernetzwerks (201) zurückzusenden.

7. System nach Anspruch 6, wobei, wenn die Antwort die Adresse des Proxys (150) enthält, das System in der Lage ist, die Daten an den Proxy (150) zu senden, der (150) weiter in der Lage ist, eine weitere Abfrage nach dem empfangenden Betreiber (301) an das Namenauflösungssystem (400) zu tätigen, oder, wenn die Antwort die Adresse des Grenz-Gateways des empfangenden Betreibers (201) enthält, das System in der Lage ist, die Daten an den empfangenden Betreiber (201) zu senden.

8. System nach Anspruch 6 oder 7, wobei das System in der Lage ist, die Antwort zu konfigurieren, indem die Quelle (101) und die Art der Verbindung zwischen der Quelle und dem empfangenden Betreiber (201, 301) bestimmt werden.

9. System nach Anspruch 8, wobei das Namenauflösungssystem (400) in der Lage ist, die Antwort mit der Adresse des Grenz-Gateways des empfangenden Betreibers (201) zu konfigurieren, wenn die Quelle (101) eine direkte Verbindung mit dem empfangenden Betreiber (201) aufweist.

10. System nach Anspruch 8, wobei das Namensauflösungssystem (400) in der Lage ist, die Antwort mit der Adresse des Proxys zu konfigurieren, wenn die Quelle (101) eine indirekte Verbindung mit dem empfangenden Betreiber (301) aufweist.

11. System nach einem der Ansprüche 6 bis 10, wobei der Inter-Service-Provider-IP-Backbone ein GRX-Netzwerk ist.

12. Namenauflösungssystem (400) für einen Inter-Service-Provider-IP-Backbone, der dazu eingerichtet ist, eine Abfrage nach einem empfangenden Betreiber (201, 301) anzunehmen, **dadurch gekennzeichnet, dass** das Namenauflösungssystem (400) in der Lage ist, eine Quelle (101) für die Abfrage zu bestimmen, wobei abhängig von der Quelle das Namenauflösungssystem (400) in der Lage ist, eine Antwort so zu konfigurieren, dass sie eine Adresse entweder eines Proxys (150) oder eines Grenz-Gateways des empfangenden Betreibers enthält, und die Adresse an die Quelle zurückzusenden, wobei der Proxy mehrere Betreibernetzwerke verbindet.

## Revendications

1. Un procédé destiné à un réseau fédérateur IP inter-fournisseurs de services comprenant un système de résolution de noms (400) et un mandataire (150), le mandataire raccordant une pluralité de réseaux d'opérateur, dans lequel une requête destinée à un opérateur de réception (201, 301) est envoyée par une partie émettrice dans un réseau d'opérateur source au système de résolution de noms (400) afin d'envoyer des données relatives à un service SIP du réseau d'opérateur source à un abonné de l'opérateur de réception (201, 301), **caractérisé en ce que**, dans le procédé, la source (101) pour la requête est déterminée par le système de résolution de noms, grâce à quoi, en fonction de la source, une réponse est envoyée en retour avec une adresse soit du mandataire (150) ou d'une passerelle frontière du réseau d'opérateur de réception (201).

2. Le procédé selon la revendication 1, dans lequel, si la réponse comprend l'adresse du mandataire (150), les données sont envoyées au mandataire (150), grâce à quoi une autre requête destinée à l'opérateur de réception (301) est adressée au système de résolution de noms (400), ou, si la réponse comprend l'adresse de la passerelle frontière de l'opérateur de réception (201), les données sont envoyées à l'opérateur de réception (201).

3. Le procédé selon la revendication 1 ou 2, dans lequel la réponse est configurée par la détermination de la source (101) et le type de connexion de la source à l'opérateur de réception (201, 301).

4. Le procédé selon la revendication 3, dans lequel la réponse avec l'adresse de la passerelle frontière de l'opérateur de réception (201) est configurée lorsque la source (101) possède une connexion directe à l'opérateur de réception (201).

5. Le procédé selon la revendication 3, dans lequel la réponse avec l'adresse du mandataire est configurée lorsque la source (101) possède une connexion indirecte à l'opérateur de réception (301).

6. Un système destiné à un réseau fédérateur IP inter-fournisseurs de services comprenant un système de résolution de noms (400) et un mandataire (150), le mandataire raccordant une pluralité de réseaux d'opérateur, le système étant capable de transmettre une requête destinée à un opérateur de réception (201, 301) par une partie émettrice dans un réseau d'opérateur source au système de résolution de noms (400) afin d'envoyer des données relatives à un service SIP du réseau d'opérateur source à un abonné de l'opérateur de réception (201, 301), **caractérisé en ce que** le système de résolution de noms est capable de déterminer la source (101) pour la requête, grâce à quoi, en fonction de la source, le système de résolution de noms (400) est capable de d'envoyer une réponse en retour avec une adresse soit du mandataire (150) ou d'une passerelle frontière du réseau d'opérateur de réception (201).

7. Le système selon la revendication 6, dans lequel, si la réponse comprend l'adresse du mandataire (150), le système est capable d'envoyer des données au mandataire (150), lequel (150) est capable en outre d'adresser une autre requête destinée à l'opérateur de réception (301) au système de résolution de noms (400), ou, si la réponse comprend l'adresse de la passerelle frontière de l'opérateur de réception (201), le système est capable d'envoyer des données à l'opérateur de réception (201).

8. Le système selon la revendication 6 ou 7, dans lequel le système est capable de configurer la réponse par la détermination de la source (101) et du type de connexion de la source à l'opérateur de réception (201, 301).

9. Le système selon la revendication 8, dans lequel le système de résolution de noms (400) est capable de configurer la réponse avec l'adresse de la passerelle frontière de l'opérateur de réception (201) lorsque la source (101) possède une connexion directe à l'opérateur de réception (201).

10. Le système selon la revendication 8, dans lequel le système de résolution de noms (400) est capable de configurer la réponse avec l'adresse du mandataire lorsque la source (101) possède une connexion indirecte à l'opérateur de réception (301).

11. Le système selon l'une quelconque des revendications 6 à 10, dans lequel le réseau fédérateur IP inter-fournisseurs de services est un réseau GRX.

12. Un système de résolution de noms (400) destiné à un réseau fédérateur IP inter-fournisseurs de services qui est agencé de façon à accepter une requête destinée à un opérateur de réception (201, 301), **caractérisé en ce que** le système de résolution de noms (400) est capable de déterminer une source (101) pour la requête, grâce à quoi, en fonction de la source, le système de résolution de noms (400) est capable de configurer une réponse comprenant une adresse soit d'un mandataire (150) ou d'une passerelle frontière de l'opérateur de réception, et à envoyer en retour ladite adresse à la source, ledit mandataire raccordant une pluralité de réseaux d'opérateur.
